# EUROPEAN PATENT APPLICATION

(11) **EP 4 685 764 A1**
(43) Date of publication of application: **28.01.2026**
(21) Application number: 24774821.3
(22) Date of filing: 14.03.2024
(51) Int. Cl.: G07F 17/42

(54) **MONEY DEPOSITING SYSTEM AND MONEY DEPOSITING METHOD**

(30) Priority: 22.03.2023 JP 2023045523
(71) Applicant: GLORY LTD., Himeji-shi Hyogo 670-8567 (JP)
(72) Inventor: NAKAGAWA, Keiju, Himeji-shi, Hyogo 670-8567 (JP); NAKAMOTO, Tasuku, Himeji-shi, Hyogo 670-8567 (JP)
(74) Representative: SSM Sandmair
(86) International application number: PCT/JP2024/010009
(87) International publication number: WO 2024/195683

(57) **Abstract**

In order to provide a money depositing system convenient for customers, a money depositing method performed by the money depositing system includes: performing a discharge process by a depositing apparatus including a depositing unit, a storage unit configured to store money therein, and a return unit, wherein, in the discharge process, money received through the depositing unit is recognized and counted in the depositing apparatus and discharged from the return unit to outside the depositing apparatus; detecting that the money discharged from the depositing apparatus is stored in a storage box, of a storage apparatus, configured to store the money therein; and issuing, from an issuing apparatus configured to issue a valuable medium, the valuable medium based on an amount of the money, on condition that storage of the money in the storage apparatus is detected.

## Description

### TECHNICAL FIELD

The present disclosure relates to a money depositing system and a money depositing method for receiving deposited money and issuing a predetermined valuable medium corresponding to the deposited amount.

### BACKGROUND ART

Conventionally, a system in which a money depositing apparatus installed at a store receives deposited money and issues a predetermined valuable medium such as a coupon redeemable at the store, has been used. Patent Literature 1 discloses a system in which a coupon is issued in exchange for coins received from a customer. For example, when a customer who saved coins at home deposits these coins into a coin exchange device installed at a store, a coupon corresponding to the deposited amount is issued from the device. The customer can use the obtained coupon for payment for an item to purchase it at the store. In such a system, a large quantity of coins saved in a bottle or the like are often deposited into the device. If a storage area for coins arranged inside the coin exchange device has reached its capacity, the customer cannot use the device to deposit coins. Thus, when the quantity of coins in the storage area is approaching full capacity, the coin exchange device lights up an indicator to notify a clerk that the storage area needs to be emptied.

### CITATION LIST

### [PATENT LITERATURE]

[PTL 1] U.S. Patent No. 5564546

### SUMMARY OF THE INVENTION

### PROBLEMS TO BE SOLVED BY THE INVENTION

In the conventional system, an apparatus for receiving coins from customers can notify a store clerk to collect coins from the apparatus. However, if the clerk does not notice the notification, the storage area for coins may reach the capacity of the apparatus and customer cannot use the apparatus to deposit coins. For example, there is a case where a customer brings a large quantity of coins to the store but cannot deposit these coins into the apparatus. In that case, the customer is forced to take the coins back home and it causes inconvenience to customers.

The present disclosure is made in view of the problems in the conventional art, and one object of the present disclosure is to provide a money depositing system and a money depositing method that are convenient for customers.

### SOLUTION TO THE PROBLEMS

A money depositing method according to the present disclosure, to be performed by a money depositing system, includes: performing a discharge process by a depositing apparatus including a depositing unit, a storage unit configured to store money therein, and a return unit, wherein, in the discharge process, money received through the depositing unit is recognized and counted in the depositing apparatus and discharged from the return unit to outside the depositing apparatus; detecting that the money discharged from the depositing apparatus is stored in a storage box, of a storage apparatus, configured to store the money therein; and issuing, from an issuing apparatus configured to issue a valuable medium, the valuable medium based on an amount of the money, on condition that storage of the money in the storage apparatus is detected. Regarding the detecting of the money stored in the storage apparatus, the storage apparatus may detect that based on an image captured by using an imaging device. The issuing of the valuable medium may be performed on condition that it is detected, based on the captured image, that the money has been stored in the storage apparatus. The money to be stored in the storage apparatus may be stored in a container, and the container may be sealed and then stored in the storage box. The issuing of the valuable medium may be performed on condition that it is detected, based on the captured image, that the container storing therein the money remains sealed until the container is stored in the storage apparatus.

In the above configuration, the discharge process may be performed when the depositing apparatus determines that money cannot be stored in the storage unit.

In the above configuration, the money depositing method may further include performing a storing process, by the depositing apparatus, in which the money received in the depositing unit is recognized and counted in the depositing apparatus and stored in the storage unit. In a case where the depositing apparatus determines that the money cannot be stored in the storage unit during the storing process, the discharge process may be performed for the money remaining in the depositing unit.

In the above configuration, the depositing apparatus may determine that money cannot be stored in the storage unit when a quantity of money stored in the storage unit reaches a predetermined capacity.

In the above configuration, the valuable medium may be issued, based on a total amount of the money stored in the storage unit of the depositing apparatus and the money stored in the storage box of the storage apparatus.

In the above configuration, the issuing of the valuable medium may include issuing a first valuable medium based on an amount of the money stored in the storage unit of the depositing apparatus, and issuing a second valuable medium based on an amount of the money stored in the storage box of the storage apparatus.

In the above configuration, the storage of the money in the storage box of the storage apparatus may be detected based on a change in weight resulting from placement of an object in the storage box. The storage apparatus may include an imaging device, and it may be detected that the money has been stored in the storage box, based on an image captured by the imaging device.

In the above configuration, the issuing of the valuable medium may be performed on condition that a weight of the object stored in the storage box matches, within a predetermined error margin, a weight of the money discharged from the depositing apparatus. The depositing apparatus may store the money in a money container and the money is discharged from the depositing apparatus in a state in which the money is being stored in the money container. It may be determined, based on a captured image of the money container, whether the money container stored in the storage box is free from damage. The issuing of the valuable medium may be performed on condition that the money container is free from damage, based on the determination result. The volume of the stored money may be estimated based on the captured image, and the issuing of the valuable medium may be performed on condition that the estimated volume of the stored money in the storage apparatus matches, within a predetermined error margin, the volume of money discharged from the depositing apparatus.

In the above configuration, the money depositing method may further include storing information on the money discharged from the depositing apparatus in the discharge process, and identification information of a money container in which the discharged money is stored, so as to be associated with each other.

In the above configuration, the issuing of the valuable medium may be performed on condition that the identification information of the money container stored in the storage apparatus is acquired. The storage apparatus may acquire the identification information from the image captured by using the imaging device. The storage apparatus may use a reading device to read a graphic code in which the identification information is encoded, to acquire the identification information from the graphic code. The storage apparatus may acquire the identification information from an electronic tag in which the identification information is stored, by using a corresponding reading device. The storage apparatus may acquire the identification information by receiving the identification information that is inputted manually.

In the above configuration, the money depositing method may further include performing a counting process, after the money discharged from the depositing apparatus in the discharge process has been stored in the storage box of the storage apparatus, in which the money taken out of the storage box is recognized and counted in the depositing apparatus, wherein the issuing of the valuable medium may be performed after completing the counting process.

In the above configuration, the money depositing method may further include performing a counting process, after the money discharged from the depositing apparatus in the discharge process has been stored in the storage box of the storage apparatus, in which the money taken out of the storage box is recognized and counted in the depositing apparatus, wherein the valuable medium may be electronic data that is activated based on an amount of the money recognized and counted in the counting process.

In the above configuration, in the discharge process, it may be possible to select whether to discharge loose money from the depositing apparatus or to place the loose money into a money container and discharge the loose money being stored in the money container.

In the above configuration, the money depositing method may further include, in a case where the loose money has been discharged from the depositing apparatus in the discharge process and the discharged loose money has been stored in the storage box of the storage apparatus, recognizing and counting, by the depositing apparatus, the loose money taken out of the storage box. The money depositing method may further include notifying that the depositing apparatus that was unable to store therein money has been restored to a state in which money can be stored in the depositing apparatus. In a case where, in response to the restoration notification, a customer takes out money from the storage box and deposits the money into the depositing apparatus again to allow the depositing apparatus to recognize and count the money inside the depositing apparatus, a benefit may be added to a valuable medium to be issued in the issuing. The money handled in the depositing apparatus may be determined to be the money taken out from the storage box, based on that the customer has caused a reading device to read information, which is printed on a receipt or includes relevant identification information, to start the depositing of the money.

A money depositing system according to the present disclosure includes: a depositing apparatus that includes a storage unit configured to store money received through a depositing unit and is configured to recognize and count, by a recognition unit, the money received through the depositing unit and discharge the money from a return unit to outside the depositing apparatus; a storage apparatus that includes a storage box configured to store the money and a detection unit configured to detect that the money discharged from the depositing apparatus has been stored in the storage box; and
an issuing apparatus configured to issue a valuable medium, based on an amount of the money that is detected by the detection unit of the storage apparatus.

### ADVANTAGEOUS EFFECTS OF THE INVENTION

The money depositing system and the money depositing method according to the present disclosure can improve the convenience for customers.

### BRIEF DESCRIPTION OF THE DRAWINGS

[FIG. 1] FIG. 1 is a schematic diagram illustrating a deposit transaction with a customer that is performed by a money depositing system according to the present embodiment.
[FIG. 2] FIG. 2 is a schematic cross-sectional view illustrating an example of a configuration of a depositing apparatus.
[FIG. 3] FIG. 3 is a block diagram showing an example of a configuration of the money depositing system.
[FIG. 4] FIG. 4 is a flowchart showing an example of a process performed by the money depositing system.
[FIG. 5] FIG. 5 is a schematic diagrams illustrating a deposit transaction of temporarily storing coins in a storage apparatus.
[FIG. 6] FIGS. 6A and 6B illustrate an example of the depositing apparatus that stores money in a money container and discharges the same.

### DESCRIPTION OF EMBODIMENT

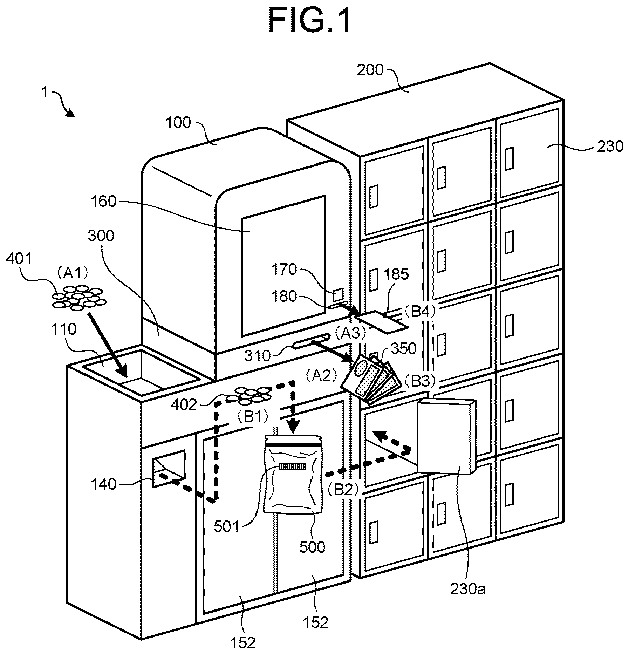

Hereinafter, an embodiment of a money depositing system and a money depositing method according to the present disclosure will be described with reference to the accompanying drawings. FIG. 1 is a schematic diagram illustrating a deposit transaction with a customer, which is performed by using a money depositing system 1 according to the present embodiment.

The money depositing system 1 issues a predetermined kind of a valuable medium in exchange for money received from a customer at a store. The value of the valuable medium to be issued is not particularly limited. The value of the valuable medium may be equal to the amount of money received from the customer, or may be lower than the received amount due to a fee charged for handling the money. A benefit may be added, whereby the value of the valuable medium may be greater than the received amount. Examples of the valuable medium include a coupon that can be used by a customer for payment of the transaction amount in a transaction with the store. The valuable medium may be referred to as a discount voucher, an exchange ticket, a gift certificate, a meal voucher, or the like. The kind of the valuable medium is not particularly limited, but the valuable medium is referred to as a coupon in the present embodiment. Although money to be received by the money depositing system 1 may be banknotes, coins, or both banknotes and coins, the description will be continued with coins as an example.

As shown in FIG. 1, the money depositing system 1 includes a depositing apparatus 100, a storage apparatus 200, and a coupon issuing apparatus 300. A customer deposits coins 401, through a depositing unit 110, into the depositing apparatus 100 (A1). The depositing apparatus 100 recognizes and counts the coins 401 received through the depositing unit 110 to calculate the deposited amount. The depositing apparatus 100 stores the coins 401 inside the apparatus 100. The coupon issuing apparatus 300 issues a coupon 350 corresponding to the deposited amount received in the depositing apparatus 100. The coupon 350 is discharged from a coupon issuing unit 310 (A2). The depositing apparatus 100 issues a receipt 185 on which information on the deposited coins and information on the issued coupon are printed. The receipt 185 is discharged from a receipt issuing unit 180 (A3a). The customer receives the coupon 350 and the receipt 185, and a deposit transaction is completed.

In the money depositing system 1, even if the depositing apparatus 100 is in a state in which coins cannot be stored therein, a deposit transaction with a customer can be continued by using the apparatus 100. For example, when the depositing apparatus 100 has become unable to store therein coins while handling the coins 401 received through the depositing unit 110, the depositing apparatus 100 continues the handling by discharging the remainder of the coins 401 through the return unit 140.

The depositing apparatus 100 performs a notification process for notifying the customer of the status of the apparatus 100 and subsequent operations. The notification process is performed using an operation/display unit 160 implemented by a touch panel type liquid crystal display device. For example, the depositing apparatus 100 displays information indicating that, since the depositing apparatus 100 is unable to store therein coins, a part of the coins 401 received through the depositing unit 110 is returned through the return unit 140, on the screen of the operation/display unit 160. The depositing apparatus 100 also displays a post-process method for returned coins 402 discharged therefrom, on the screen.

The operation/display unit 160 displays the screen including information to instruct the customer to perform the post-process. In the post-process, the coins 402 discharged from the return unit 140 are placed into a predetermined cash bag 500 and this cash bag 500 is stored in a storage box 230 of the storage apparatus 200. The screen also displays information indicating that a coupon corresponding to the amount of the deposited coins stored inside the depositing apparatus 100 is issued and a coupon corresponding to the amount of the discharged coins 402 will be issued if the customer performs the post-process and then performs a deposit transaction for these coins 402.

The operation/display unit 160 may display a screen showing that, of the coins 401 received through the depositing unit 110, the amount of the coins stored inside the apparatus and the amount of the coins 402 discharged through the return unit 140. If the customer performs the deposit transaction for the coins 402 later, the depositing apparatus 100 may issue a coupon corresponding to the amount obtained by adding a benefit to the amount of the coins 402. The operation/display unit 160 may display a screen showing the amount of the benefit that can be obtained by performing the post-process and the deposit transaction for the coins 402. The customer may be allowed to select either to take back home the coins 402 returned from the return unit 140 or to temporarily store the coins 402 in the storage apparatus 200.

The customer places the coins 402 discharged from the return unit 140, into the cash bag 500 and seals the cash bag 500 (B1). The cash bag 500 is a money container to be used for storing coins in the storage apparatus 200. The cash bag 500, which consists of a bag body, is designed such that once coins are put into the bag body and an opening of the bag body is closed, the coins cannot be taken out therefrom unless the bag body is torn. Thus, the customer can confirm that any coins that the customer has stored in the cash bag 500 are not taken out therefrom.

Bag information 501 is printed on the surface of the cash bag 500. The bag information 501 includes a bag number (identification information) to identify each cash bag 500 and a graphic code in which the bag number is encoded. The operation/display unit 160 displays a screen including information instructing the customer to input the bag number. The customer uses the reading unit 170 to read the graphic code in the bag information 501. Then, the customer opens a door 230a of the storage box 230 of the storage apparatus 200 and stores the cash bag 500 into the storage box 230.

The storage apparatus 200 includes a plurality of the storage boxes 230, and manages stored items, based on storage box numbers (identification information) to identify each storage box 230. The storage apparatus 200 can detect that an object has been stored in the storage box 230, based on a change in weight in the storage box 230. The storage apparatus 200 detects the weight of the cash bag 500 stored in the storage box 230. The storage apparatus 100 detects that the door 230a of the storage box 230, in which the weight of the cash bag has been detected, is closed, and locks the closed door 230a by using an electromagnetic lock mechanism.

The depositing apparatus 100 confirms that the weight detected in the storage box 230 of the storage apparatus 200 matches the weight of the coins 402 returned from the return unit 140, within a predetermined error margin. If the detected weight does not match the weight of the coins 402, the depositing apparatus 100 displays information instructing the customer to confirm the coins 402 in the storage box 230, on the screen of the operation/display unit 160. The confirmation as to whether the weights match may be performed before the door 230a is locked, and if the weights do not match, the door 230a may remain unlocked. Thus, the storage apparatus 200 is prevented from being used for purposes other than those related to the returned coins for the deposit transaction.

The depositing apparatus 100 confirms that the coins 402 discharged from the return unit 140 is stored in the storage box 230 of the storage apparatus 200 and the door 230a is locked. The depositing apparatus 100 stores, in a memory 103, the amount of the coins 402 discharged through the return unit 140, a bag number of the cash bag 500, a storage box number of the storage box 230 storing therein the cash bag 500, and the date and time when the cash bag 500 has been stored, as transaction information, in association with a transaction number (identification information) to identify each deposit transaction. The information to be stored in the memory 103 may be transmitted/received through a communication unit 102 via a network 2, and may be stored in the storage apparatus 200 or the coupon issuing apparatus 300. In this case, the depositing apparatus 100 may acquire the information from the storage apparatus 200 or the coupon issuing apparatus 300 through the communication unit 102 via the network 2 to use it.

The depositing apparatus 100 causes the coupon issuing unit 310 of the coupon issuing apparatus 300 to issue the coupon 350 corresponding to the amount of coins stored in the depositing apparatus 100 (B3). In a case where the depositing apparatus 100 has already recognized and counted the coins 402 that are placed into the cash bag 500 and stored in the storage apparatus 200, a coupon corresponding to an amount, which includes the amount of the coins 402, may be issued.

The depositing apparatus 100 causes the receipt issuing unit 180 to issue two receipts 185 (B4). The amount of coins stored inside the depositing apparatus 100 and information on the issued coupon 350 are printed on one of the receipts 185. On the other of the receipts 185, the amount of the coins 402 discharged through the return unit 140 by the depositing apparatus 100, i.e., the amount of the coins 402 placed into the cash bag 500 and stored in the storage box 230 of the storage apparatus 200, a transaction number thereof, and the graphic code in which the transaction number is encoded, are printed.

When a deposit transaction in which a part of received coins are returned through the return unit 140 occurs, the depositing apparatus 100 performs a notification process of notifying the clerk of this fact. The depositing apparatus 100 notifies the clerk, through a communication terminal carried by the clerk, that it is necessary to check the status of the depositing apparatus 100. The clerk receives information on the reason why the coins have been returned. For example, the clerk is notified that it is necessary to collect coins from the depositing apparatus 100, or that a malfunction occurred inside the depositing apparatus 100. Upon being notified, the clerk performs coin collection work, trouble recovery operation, or the like for the depositing apparatus 100, to restore the depositing apparatus 100 to a state in which the depositing apparatus 100 can store therein coins. As shown in FIG. 1, the depositing apparatus 100 is provided with a door 152 on the front side thereof. The door 152 is locked, but the clerk can unlock and open the door 152. The clerk opens the door 152 to expose the inside of the depositing apparatus 100, and performs the coin collection work, the trouble recovery operation, or the like. When it becomes possible to deposit coins into the depositing apparatus 100, a notification is posted on a predetermined website to inform that the depositing apparatus 100 can be used, which will be described below. The notification may be sent to the customer to notify that it is possible to deposit coins into the depositing apparatus 100. For example, the customer may be notified through an announcement inside the store, display on the operation/display unit 160, transmission of information to a communication terminal such as a smartphone carried by the customer, or the like.

After the depositing apparatus 100 has been restored, the customer who has received the two receipts 185 causes the reading unit 170 of the depositing apparatus 100 to read the graphic code printed on one of the receipts 185. Based on the transaction number included in the graphic code, the depositing apparatus 100 identifies transaction information on the deposit transaction in which the discharged coins 402 have been stored in the storage apparatus 200. The storage apparatus 200 unlocks the door 230a of the storage box 230 corresponding to the storage box number included in the transaction information. The customer takes out the cash bag 500 from the storage box 230. The customer tears the cash bag 500 taken out of the storage box 230, and deposits the coins 402 stored in the cash bag 500 into the depositing apparatus 100. The depositing apparatus 100 recognizes and counts the coins 402 to calculate the deposited amount. The depositing apparatus 100 stores the coins 402 inside the apparatus 100.

The depositing apparatus 100 causes the coupon issuing unit 310 of the coupon issuing apparatus 300 to issue a coupon 350 corresponding to the amount of the deposited coins 402. If a coupon corresponding to an amount, which already includes the amount of the coins 402, has been issued when the cash bag 500 was stored in the storage apparatus 200, a coupon only for a benefit is issued. In a case where the benefit is provided to the customer who has deposited the coins 402, the depositing apparatus 100 confirms that the amount of the deposited coins 402 matches the amount included in the transaction information. That is, it is confirmed whether the deposited amount of the coins 402 matches the amount of the coins 402 previously discharged through the return unit 140. If the deposited amount matches the amount in the transaction information, a coupon 350 corresponding to the total amount of the deposited amount and the amount of a predetermined benefit is issued by the coupon issuing unit 310 of the coupon issuing apparatus 300. The receipt 185 is issued by the receipt issuing unit 180, and the deposit transaction with the customer ends. If the amount of the deposited coins 402 does not match the amount in the transaction information, the depositing apparatus 100 performs a predetermined processing. For example, the depositing apparatus 100 may perform a process for calling the clerk.

As described above, in the money depositing system 1, even if the depositing apparatus 100 becomes unable to store therein coins, the customer temporarily stores coins discharged from the depositing apparatus 100, in the storage apparatus 200, and then deposits these coins into the depositing apparatus 100 later, to complete the deposit transaction. Thus, the customer need not take back home the coins he/she brought to the store. For example, if the depositing apparatus 100 is restored while the customer is shopping at the store, the customer can deposit the coins in the storage apparatus 200 into the depositing apparatus 100 and can receive a coupon. The customer may leave the store and visit the store again to deposit the coins 402 at a later date. In this case, settings may be made such that the customer receives a coupon including a benefit corresponding to this effort. The provisions of benefits is not mandatory. The benefits may not be provided to customers. The clerk can set whether to provide a benefit, and the amount of the benefit.

The customer can perform a deposit transaction by using the storage apparatus 200 as described above, not only when the depositing apparatus 100 becomes unable to store coins therein during the deposit transaction but also when the depositing apparatus 100 is in a state in which coins cannot be stored inside the apparatus 100, before starting the deposit transaction. Even in the latter case, a process of accepting the deposit transaction can be performed as in the above-described example. In this case, processes may be performed in the same way as those in the above example, which are performed assuming that the amount of coins stored in the depositing apparatus 100 after starting the first deposit process in the above example is 0 (zero), for example.

In the above description, the customer deposits coins taken out from the cash bag 500, into the depositing apparatus 100. However, the clerk may deposit the coins in the cash bag 500 into the depositing apparatus 100. When the depositing apparatus 100 has been restored to a state in which coins can be stored in the apparatus 100, the depositing apparatus 100 may notify the clerk, by displaying on the operation/display unit 160, a storage box number of the storage box 230 storing the cash bag 500. Upon being notified, the clerk may take out the cash bag 500 and deposit the coins in the cash bag 500, into the depositing apparatus 100 and store a coupon 350 issued by the coupon issuing apparatus 300, in the storage box 230 in which the cash bag 500 was stored. In this case, the customer may put the receipt 185 over the reading unit 170 to open the storage box 230, receive the coupon 350 and leave the store.

In the above description, the customer causes the reading unit 170 to read the graphic code included in the bag information 501 of the cash bag 500. However, the customer may operate the operation/display unit 160 to manually input the bag number included in the bag information 501. The bag information 501 may not necessarily be already printed on the cash bag 500, and the depositing apparatus 100 may generate and output a bag number. For example, the depositing apparatus 100 may use a label printer to print the bag number on a label, and cause the customer to apply the label to the cash bag 500. The cash bag 500 may include an IC tag such as an RFID tag which stores a bag number, and the reading unit 170 of the depositing apparatus 100 may read the bag number from the IC tag.

In the above description, the storage apparatus 200 performs detection, based on the weight of the cash bag 500 stored in the storage box 230. However, the storage apparatus 200 may include an imaging device and detect that the cash bag 500 has been stored in the storage box 230, by analyzing an image captured by the imaging device. The storage apparatus 200 may determine that the coins 402 have been stored in the storage apparatus 200, based on that the volume of the cash bag 500 predicted from the captured image matches the volume of the coins 402 discharged from the return unit 140, within a predetermined error margin.

In the money depositing system 1, regarding the coins 402 returned from the depositing apparatus 100, a coupon may be issued on condition that the coins 402 have been stored in the storage apparatus 200. Alternatively, a coupon may be issued on condition that the coins 402 have been stored in the storage apparatus 200 and then have been deposited and stored in the depositing apparatus 100. In a case where the coupon is issued when the coins 402 are stored in the storage apparatus 200, the storage apparatus 200 determines whether the coins 402 are stored. Upon receiving the determination result, the depositing apparatus 100 may issue the coupon, based on the total amount of the amount of the coins stored inside the depositing apparatus 100 and the amount of the coins 402 stored in the storage apparatus 200. In the above description, the coupon for the amount of a benefit is issued when the coins 402 have been deposited and stored in the depositing apparatus 100. However, a coupon including the amount of the benefit may be issued when the coins 402 are stored in the storage apparatus 200.

For example, it may be determined that the coins 402 have been stored in the storage apparatus 200, based on the weight of coins 402 discharged from the return unit 140 and the weight of the cash bag 500 detected by the storage apparatus 20. A coupon may be issued from the coupon issuing apparatus 300 based on the determination result. For another example, the coupon issuing apparatus 300 may issue a coupon on condition that the storage apparatus 200 has acquired identification information of the stored cash bag 500 through manually inputting, reading from an IC tag, analyzing of the captured image, or the like. A coupon may be issued on condition that it has been detected, by monitoring the actions of the customer, that the customer has stored the cash bag 500 in the storage box 230 without any suspicious behavior. A coupon may be issued on condition that the predicted volume of coins stored in the cash bag 500, which is obtained by analyzing the captured image of the cash bag 500, matches the volume of the coins 402 actually discharged from the return unit 140, within the predetermined error margin. Through analysis of the captured image, it may be detected that the cash bag 500 having therein the coins 402 is sealed, and a coupon may be issued on condition that the cash bag 500 is sealed. A coupon may be issued on condition that it is determined that, through analysis of the captured image, the cash bag 500, in which the coins 402 are stored and whose opening is sealed, is free from damage such as tears.

The coupon 350 may not necessarily be issued in the form of paper, plastic, or other media, and may be an electronic coupon issued as electronic data. For example, the electronic coupon issued by the coupon issuing apparatus 300 may be transmitted to a communication terminal such as a smartphone, a card-type storage medium, or the like, carried by the customer. The electronic coupon may be transmitted via a network or using near-field communication.

For example, an electronic coupon may be provisionally issued at the time when the cash bag 500 storing the coins 402 has been stored in the storage box 230, and may be activated after the customer or the clerk has deposited the coins 402 into the depositing apparatus 100. If the electronic coupon is activated and made available at the store on condition that the clerk has taken out the cash bag 500 from the storage apparatus 200 and has deposited the coins 402 into the depositing apparatus 100, the customer can receive the electronic coupon without returning to an installation location of the storage apparatus 200.

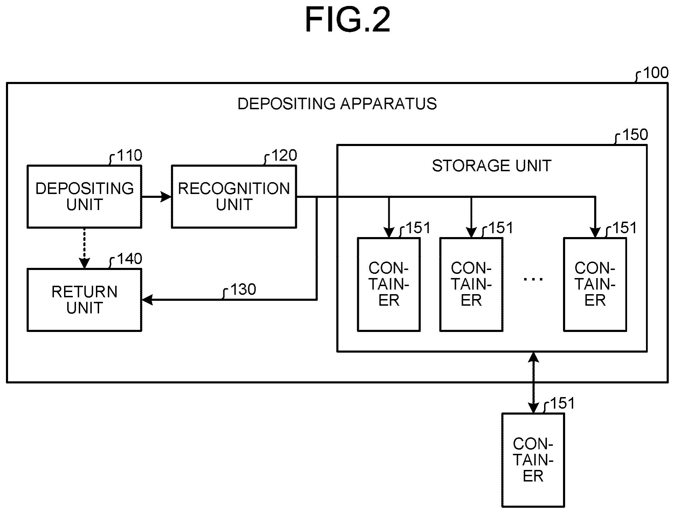

FIG. 2 is a schematic cross-sectional view illustrating an example of a configuration of the depositing apparatus 100. The depositing apparatus 100 includes a recognition unit 120, a transport unit 130, and a storage unit 150, in addition to the depositing unit 110 and the return unit 140 shown in FIG. 1. The depositing unit 110 feeds out received coins into a transport path one by one. As shown by an arrow in FIG. 2, the transport unit 130 transports coins, among the depositing unit 110, the recognition unit 120, the return unit 140, and the storage unit 150. The recognition unit 120 recognizes a denomination of each coin being transported by the transport unit 130. Based on the recognition result, coins that cannot be recognized are returned through the return unit 140, and coins that can be recognized are transported to the storage unit 150 and stored in a container 151.

The storage unit 150 is configured to allow the container 151 to be attached and detached. The number of the attachable/detachable containers 151 is not particularly limited. The number of the attachable/detachable containers 151 may be one or more. The storage unit 150 may include a storage container fixed and used inside the apparatus, in addition to the attachable/detachable containers 151. The container 151 may be a bag-type container or a cassette-type container. The storage unit 150 stores coins transported by the transport unit 130, in the container 151. In a case where denominations of coins to be stored in the container 151 are not set, the storage unit 150 stores coins in the same container 151 regardless of denomination. When the quantity of coins stored in the container 151 reaches a predetermined capacity, the storage unit 150 determines that the container 151 is full, and stores coins in the next container 151. In a case where denominations of coins to be stored in the respective containers 151 are set, the storage unit 150 stores coins in each container 151 by denomination, based on the recognition result by the recognition unit 120. For example, the clerk can set such that coins are stored in a plurality of the containers 151 by denomination. The clerk can dismount the container 151, which is full of coins, from the storage unit 150 to collect the coins from the depositing apparatus 100. These coins are collected with the container in a state in which the coins are stored therein. Upon collecting the container 151, the clerk attaches an empty container 151 to the storage unit 150, instead of the dismounted and collected container.

A dashed arrow between the depositing unit 110 and the return unit 140 shown in FIG. 2 indicates that coins in the depositing unit 110 can be returned to the return unit 140 from the depositing unit 110. For example, the depositing apparatus 100 opens a gate disposed at the bottom of the depositing unit 110, and allows the coins in the depositing unit 110 to fall into the return unit 140, so that the coins can be returned to the customer. If the depositing apparatus 100 becomes a state in which coins in the depositing unit 110 cannot be handled inside the apparatus 100 during a deposit transaction, the coins can be returned from the return unit 140 and the deposit transaction is changed into another deposit transaction in which the returned coins are temporarily stored in the storage apparatus 200, which will be described below.

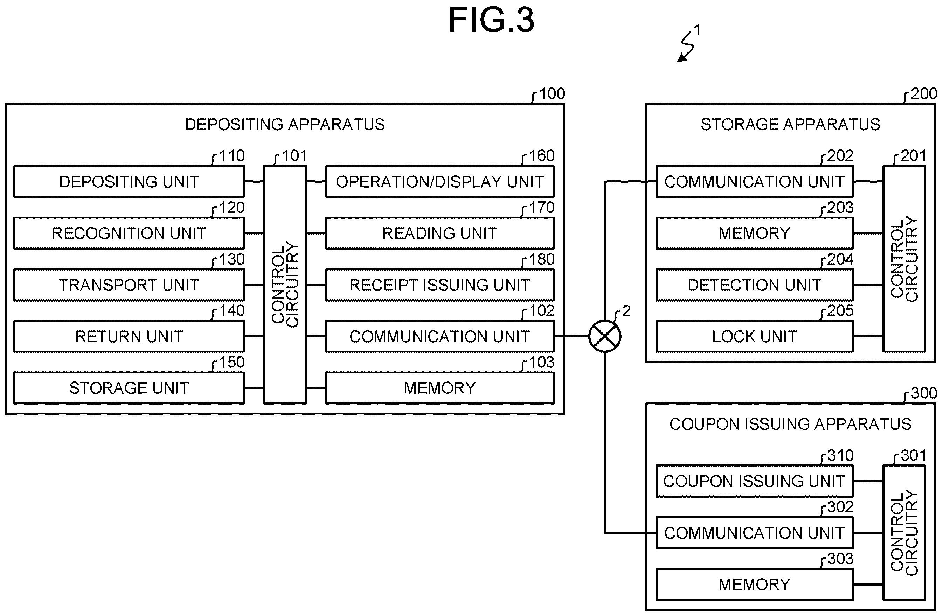

FIG. 3 is a block diagram showing an example of a configuration of the money depositing system 1. The depositing apparatus 100 includes a control circuitry 101, a communication unit 102, and a memory 103, in addition to the configuration shown in FIG. 2. The communication unit 102 is used for communication with an external device via a network 2. The depositing apparatus 100 communicates with the storage apparatus 200 and the coupon issuing apparatus 300 by using the communication unit 102. In addition, in a case where the container 151 needs to be collected from the storage unit 150, or in a case where a malfunction such as a coin jam in the transport path occurs, the depositing apparatus 100 performs a notification process to the clerk by using the communication unit 102. Upon being notified, the clerk can perform collection work for the container 151, a trouble recovery operation, or the like.

The memory 103 is a nonvolatile storage device used for storing various kinds of information necessary for the operation of the depositing apparatus 100. Information on a deposit transaction performed by the depositing apparatus 100 is stored in the memory 103. A program corresponding to the control circuitry 101 is stored in advance in the memory 103 or a dedicated storage device. The program being executed by hardware such as a CPU realizes the functions and operations of the control circuitry 101. The control circuitry 101 can control the depositing apparatus 100, the storage apparatus 200, and the coupon issuing apparatus 300, based on information inputted/outputted through the operation/display unit 160, information transmitted/received through the communication unit 102, and information stored in the memory 103. Thus, the functions and operations of the money depositing system 1 described in the present embodiment are realized.

The storage apparatus 200 includes a control circuitry 201, a communication unit 202, a memory 203, a detection unit 204, and a lock unit 205. The communication unit 202 is used for communication with an external device via the network 2.

The detection unit 204 detects that the cash bag 500 is stored in the storage box 230 of the storage apparatus 200. For example, a weight sensor, the imaging device, or the like disposed at each storage box 230 is used as the detection unit 204. One weight sensor may detect weight changes inside the plurality of storage boxes 230. One or more imaging devices for imaging the entire storage apparatus 200 may be used as the detection unit 204.

The lock unit 205 locks each door 230a of the storage boxes 230 of the storage apparatus 200. When the cash bag 500 is stored in the storage box 230, the detection unit 204 detects that the customer has stored the cash bag 500 in the storage box 230, and the lock unit 205 locks the door 230a of the storage box 230 closed by the customer. Thereafter, when the cash bag 500 needs to be removed from the storage box 230, the lock unit 205 unlocks the door 230a.

The memory 203 is a nonvolatile storage device used for storing various kinds of information necessary for the operation of the storage apparatus 200. A program corresponding to the control circuitry 201 is stored in advance in the memory 203 or a dedicated storage device, and the program being executed by hardware such as a CPU realizes the functions and operations of the control circuitry 201. The control circuitry 201 controls the detection unit 204 and the lock unit 205, based on information transmitted and received through the communication unit 202 and information stored in the memory 203. Thus, the functions and operations of the storage apparatus 200 described in the present embodiment are realized.

The coupon issuing apparatus 300 includes a control circuitry 301, a communication unit 302, and a memory 303, in addition to the coupon issuing unit 310 shown in FIG. 1. The communication unit 302 is used for communication with an external device via the network 2.

The coupon issuing unit 310 issues a coupon, based on the amount of coins deposited into the depositing apparatus 100. In a case where the coupon is issued in printed form on paper, plastic, or other media, the coupon issuing unit 310 includes a printer and issues a coupon on which coupon information is printed. In a case where a coupon is issued as an electronic coupon, the coupon issuing unit 310 uses the communication unit 202 to transmit data including coupon information to a communication terminal or the communication medium carried by the customer. The coupon information includes an issue date of the coupon, the amount payable with the coupon, an expiration date of the coupon, and the like.

The memory 303 is a nonvolatile storage device used for storing various kinds of information necessary for the operation of the coupon issuing apparatus 300. A program corresponding to the control circuitry 301 is stored in advance in the memory 303 or a dedicated storage device, and the program being executed by hardware such as a CPU realizes the functions and operations of the control circuitry 301. The control circuitry 301 controls the coupon issuing unit 310, based on information transmitted and received through the communication unit 302 and information stored in the memory 303. Thus, the functions and operations of the coupon issuing apparatus 300 described in the present embodiment are realized.

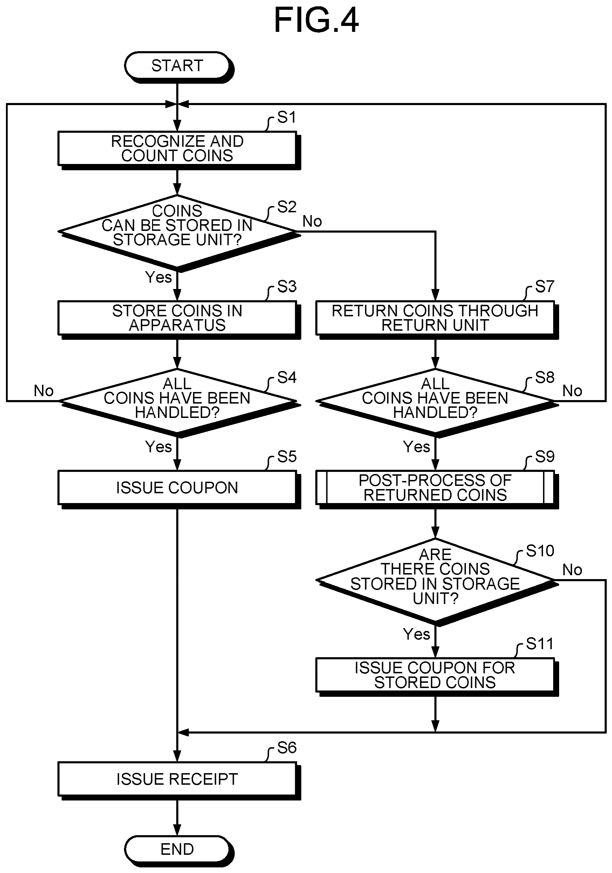

FIG. 4 is a flowchart showing an example of a process performed by the money depositing system 1. When the customer starts a deposit transaction by the depositing apparatus 100, the depositing apparatus 100 feeds coins received in the depositing unit 110 one by one into inside the apparatus 100. The depositing apparatus 100 causes the transport unit 130 to transport the coins, and causes the recognition unit 120 to recognize and count the coins (step S1). If the coins can be stored in the container 151 of the storage unit 150 (step S2; Yes), the depositing apparatus 100 stores the coins inside the apparatus, i.e., in the container 151 of the storage unit 150 (step S3). Until all the coins received in the depositing unit 110 are handled (step S4; No), the process of recognizing and counting the coins and storing the coins in the storage unit 150 is repeated. When all the coins have been stored in the container 151 of the storage unit 150 (step S4; Yes), the depositing apparatus 100 causes the coupon issuing apparatus 300 to issue a coupon (step S5). The depositing apparatus 100 causes the receipt issuing unit 180 to issue a receipt (step S6), and ends the deposit transaction.

If coins cannot be stored in the container 151 of the storage unit 150 from the start of the deposit transaction (step S2; No), the depositing apparatus 100 returns the recognized and counted coins through the return unit 140 (step S7). Also, if the depositing apparatus 100 becomes a state in which the coins cannot be stored in the container 151 of the storage unit 150 during the deposit transaction (step S2; No), the depositing apparatus 100 returns the remaining coins from the return unit 140 after these coins are recognized and counted inside the apparatus 100 (step S7).

For example, if the container 151 of the storage unit 150 is full of coins and is unable to store therein coins, the coins are returned through the return unit 140. For example, if coins cannot be stored in the container 151 due to a malfunction such as a coin jam but the coins in the depositing unit 110 can be recognized by the recognition unit 120 and can be returned through the return unit 140, the coins are recognized and returned through the return unit 140.

Until all the coins received in the depositing unit 110 are handled (step S8; No), the process of recognizing, counting, and returning each coin is repeated. When all the coins have been handled by the depositing apparatus 100 (step S8; Yes), as described with reference to FIG. 1, a post-process is performed (step S9). In the post-process, the returned coins are placed into a cash bag 500 and the cash bag 500 is stored in the storage box 230 of the storage apparatus 200.

If there are coins stored in the container 151 of the storage unit 150 (step S10; Yes), the depositing apparatus 100 causes the coupon issuing apparatus 300 to issue a coupon corresponding to the amount of these coins (step S11). The depositing apparatus 100 causes the receipt issuing unit 180 to issue two receipts (step S6), and ends the deposit transaction. Information on the coins placed into the cash bag 500 and stored in the storage box 230 of the storage apparatus 200 is printed on one of the two receipts. As described above, after the depositing apparatus 100 is restored, the coins in the cash bag 500 are deposited into the depositing apparatus 100 using this receipt.

If there is no coin stored in the container 151 of the storage unit 150 (step S10; No), the depositing apparatus 100 causes the receipt issuing unit 180 to issue a receipt on which information on the coins placed into the cash bag 500 and stored in the storage box 230 of the storage apparatus 200 is printed (step S6), and ends the deposit transaction. As described above, after the depositing apparatus 100 is restored, the coins in the cash bag 500 are deposited into the depositing apparatus 100 by using the receipt.

As described with reference to FIG. 1, if a coupon is issued, on condition that the cash bag 500 is stored in the storage apparatus 200, based on a total amount of the coins stored in the container 151 of the storage unit 150 of the depositing apparatus 100 and the coins placed in the cash bag 500 and stored in the storage box 230 of the storage apparatus 20, a process of issuing a coupon corresponding the total amount may be performed, instead of step S10 and step S11.

In the money depositing system 1, even if a malfunction such as a coin jam occurs in the depositing apparatus 100 and coins in the depositing unit 110 cannot be recognized and counted, the coins can be temporarily kept in the storage apparatus 200 such that the customer who brings the coins to the store does not have to take the coins back home. In this case where the storage apparatus 200 is used to temporarily keep coins which are not yet handled in a depositing process performed by the depositing apparatus 100, the storage apparatus 200 may include a coin depositing unit 210, a deposit receipt issuing unit 280, and a reading unit 270 for reading a graphic code 451 on a deposit receipt 450, in addition to the configuration shown in FIG. 3. Hereinafter, the configuration will be specifically described.

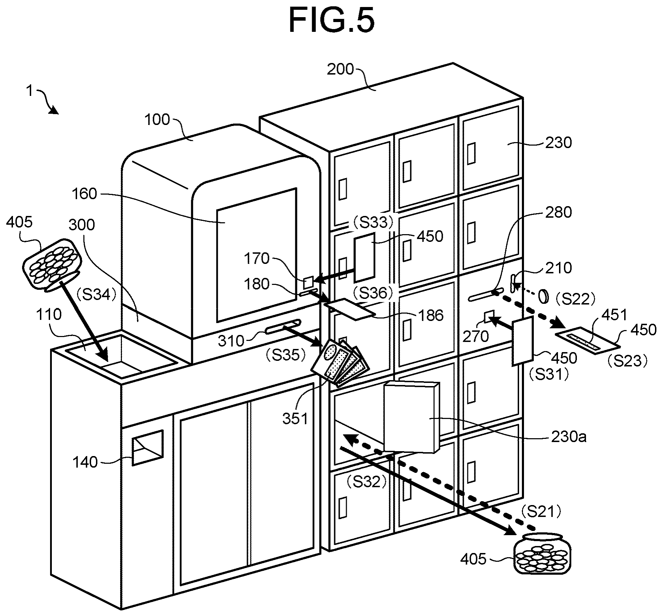

FIG. 5 is a schematic diagram illustrating a deposit transaction for which coins are temporarily kept in the storage apparatus 200. The screen of the operation/display unit 160 of the depositing apparatus 100 displays information indicating that the depositing apparatus 100 is unable to receive coins but the coins can be temporarily stored in the storage apparatus 200. The screen also displays information indicating that, although a storage fee is required for the storage apparatus 200, a coupon corresponding to an amount obtained by adding the storage fee and a benefit to the deposited amount will be issued if the temporarily-stored coins are deposited into the depositing apparatus 100 later. The storage fee, and the amount of the benefit that can be obtained by the customer may be displayed on the operation/display unit 160.

The customer stores coins 405 he/she brought to the store, in the storage box 230 of the storage apparatus 200 (S21). The customer can temporarily store the coins 405 in the storage box 230, along with the container having therein the coins 405. The storage apparatus 200 causes the detection unit 204 to detect the storage box 230 in which the customer has stored the coins 405. When the customer inserts coins for the storage fee through the coin depositing unit 210 of the storage apparatus 200 (S22), the storage apparatus 200 controls the lock unit 205 to lock the door 230a of the storage box 230 in which the coins 405 are stored with the container containing the coins 405 therein. The storage apparatus 200 causes the deposit receipt issuing unit 280 to issue a deposit receipt 450 (S23). The deposit receipt issuing unit 280 prints, on the deposit receipt 450, the date and time when the customer stored the coins 405 in the storage apparatus 200, a transaction number to identify a deposit transaction for the coins 405, a storage box number of the storage box 230 in which the coins 405 have been stored, and the graphic code 451 in which these are encoded, and issues the deposit receipt 450. The storage apparatus 200 stores the date and time when the customer stored the coins 405, the storage box number of the storage box 230, and the like, in the memory 203, in association with the transaction number. Information to be stored in the memory 203 may be transmitted/received through the communication unit 202 via the network 2, and may be stored in the depositing apparatus 100 or the coupon issuing apparatus 300. In this case, the storage apparatus 200 may acquire the information from the depositing apparatus 100 or the coupon issuing apparatus 300 by the communication unit 202 via the network 2 to use it.

After the depositing apparatus 100 has been restored, the customer causes the reading unit 270 of the storage apparatus 200 to read the graphic code 451 on the deposit receipt 450 (S31). The storage box number of the storage box 230, in which the customer has stored the coins 405, is identified from the graphic code 451, and the lock unit 205 is controlled to unlock the door 230a of that storage box 230. The storage apparatus 200 transmits information such as a transaction number identified from the graphic code 451, to the depositing apparatus 100.

The customer takes out the coins 405 from the storage box 230 (S32). The customer causes the reading unit 170 of the depositing apparatus 100 to read the graphic code 451 on the deposit receipt 450 (S33). The customer deposits the coins 405 into the depositing apparatus 100 through the depositing unit 110 (S34).

The depositing apparatus 100 recognizes that a deposit transaction is being performed for the coins 405 that have been temporarily stored in the storage apparatus 200, based on that the transaction number obtained from the graphic code 451 matches the transaction number received from the storage apparatus 200. The depositing apparatus 100 calculates a total amount obtained by adding the storage fee for the storage apparatus 200 and the amount of a predetermined benefit, to the amount of the deposited coins 405, and issues a coupon 351 corresponding to the total amount (S35). The depositing apparatus 100 issues a receipt 186 on which information on the transaction content is printed (S36), and ends the deposit transaction with the customer.

In this case as well, the depositing apparatus 100 may determine that the weight of the coins 405 and the container detected by the detection unit 204 of the storage apparatus 200 matches the weight of the coins deposited in the depositing apparatus 100 within a predetermined error margin. If the weights do not match, information may be displayed on the operation/display unit 160 to ask the customer to confirm that the coins 405 taken out from the storage apparatus 200 have been deposited. The coupon 351, whose value includes the storage fee and the amount of the benefit, may be issued on condition that the weights match. If the weights do not match, the coupon 351 corresponding to the amount deposited in the depositing apparatus 100 may be issued. The refund of storage fee and the provision of the benefit are not mandatory. The clerk may set whether the storage fee is refunded and whether the benefit is provided.

As described above, in the money depositing system 1, even if the depositing apparatus 100 is in a state in which the apparatus 100 is unable to receive coins, the coins can be temporarily kept in the storage apparatus 200. Thus, the customer can temporarily store the coins he/she brought to the store, in the storage apparatus 200 and can leave the store. When the customer uses the storage apparatus 200 to temporarily keep the coins therein, the storage fee is charged to the customer. However, when the coins are deposited into the depositing apparatus 100, the amount equivalent to the storage fee is added to the deposited amount. Therefore, the customer need not bear the storage fee. Although the customer needs to visit the store again to perform the deposit transaction of the coins at a later date, the customer can receive a coupon including a benefit in return for the effort.

In addition to the above described example in which the customer cannot use the depositing apparatus 100, the customer can use the storage apparatus 200 to temporarily keep his/her coins therein as described with reference to FIG. 5, in a case where the depositing apparatus 100 becomes unable to handle coins in the middle of a deposit transaction, after the deposit transaction has started and some coins have been handled in the apparatus 100. In this case, the depositing apparatus 100 opens the gate at the bottom of the depositing unit 110, and coins remaining in the depositing unit 110 are returned to the customer through the return unit 140. The customer only has to deal with the returned coins as described with reference to FIG. 5.

In FIG. 5, the customer deposits coins 405 taken out from the storage apparatus 200, into the depositing apparatus 100. However, the clerk may perform the deposit process of the coins 405. After the depositing apparatus 100 has been restored to the normal state, the clerk may deposit the coins 405 into the depositing apparatus 100, and may place back, into the storage box 230, the coupon 351 issued by the coupon issuing apparatus 300 and the container in which the coins 405 were placed, so that the customer who opened the storage box 230 can take out the coupon 351 and the container and can leave the store. The coupon 351 may not necessarily be issued in the form of paper, plastic, or other media. An electronic coupon issued by the coupon issuing apparatus 300 may be transmitted to a communication terminal such as a smartphone, a card-type storage medium, or the like, carried by the customer.

In FIG. 5, the storage apparatus 200 receives the storage fee. However, the depositing apparatus 100 may include another coin handling unit for receiving the storage fee. In FIG. 5, the storage apparatus 200 causes the deposit receipt issuing unit 280 to issue the deposit receipt 450. However, the receipt issuing unit 180 or the coupon issuing unit 310 of the depositing apparatus 100 may serve as the deposit receipt issuing unit 280. The deposit receipt 450 may be issued as electronic data, and may be transmitted to the communication terminal such as a smartphone or the like carried by the customer. In FIG. 5, the storage apparatus 200 causes the reading unit 270 to read information on the deposit receipt 450. However, the reading unit 170 of the depositing apparatus 100 may serve as the reading unit 270 for the deposit receipt 450. The storage apparatus 200 may include an operation unit, and information on the deposit receipt 450 may be inputted manually. The reading unit 270, the deposit receipt issuing unit 280, and the coin handling unit including the coin depositing unit 210 may be provided in an apparatus installed independently from the depositing apparatus 100 and the storage apparatus 200, and this apparatus may be used by communicably connecting to the depositing apparatus 100 and the storage apparatus 200.

In the present embodiment, a deposit transaction that is performed by the customer who visits the store is described. However, in the money depositing system 1, the status of the depositing apparatus 100 can be notified to the customer before he/she visits the store. When the depositing apparatus 100 has become unable to receive coins, information indicating this fact is transmitted to a predetermined server used by the store. The server publishes the availability of the depositing apparatus 100 on a predetermined website on the Internet. The customer can check whether the depositing apparatus 100 is available by referring to the website before going to the store.

The money depositing system 1 may accept advance reservations for deposit transactions via the website. For example, if the customer knows denominations and the quantity for each denomination of coins to be deposited, the customer specifies the denominations and the quantity for each denomination to reserve a deposit transaction. The depositing apparatus 100 secures a storage space in the container 151 of the storage unit 150 so as to be able to receive the coins for the reservation. The customer can use an image of coins to be deposited, which may be captured by using a camera of a smartphone, to reserve a deposit transaction. The depositing apparatus 100 predicts the quantity of coins to be deposited by analyzing the captured image, and secures the storage space in the container 151 of the storage unit 150 such that a predicted quantity of coins can be stored therein. Thus, it is possible to avoid the situation in which the customer visits the store with the coins but cannot deposit the coins because the storage unit 150 is full. A time limit, for example, two hours from the reservation, may be set for the reservation for the deposit transaction. Only store members may be allowed to reserve deposit transactions, and a customer who makes a reservation but does not perform the deposit transaction may be subject to penalties.

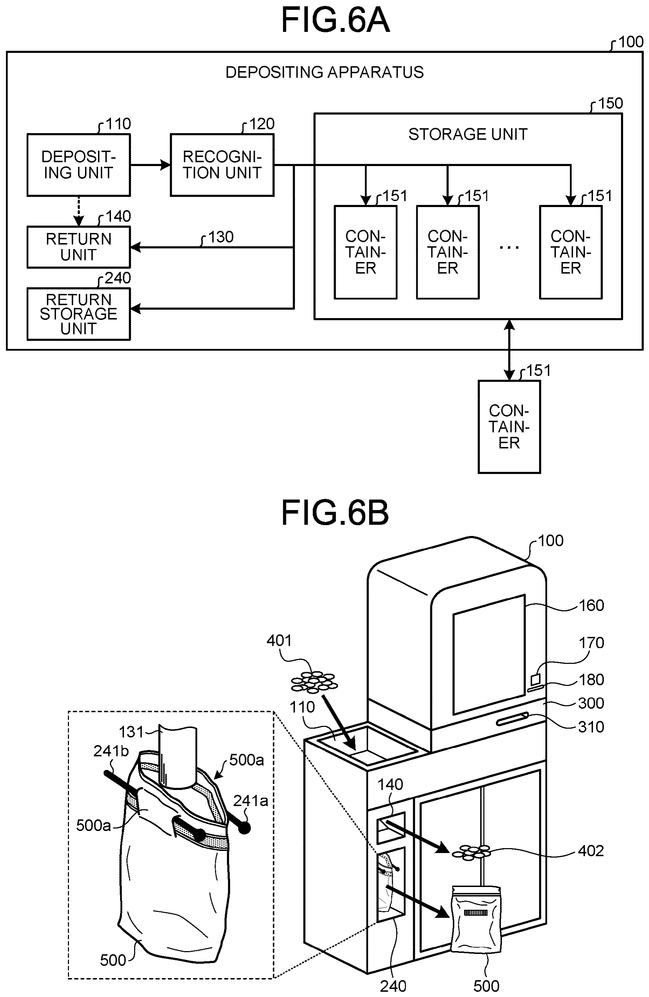

In the example shown in FIG. 1 of the present embodiment, the customer places the coins 402 returned from the return unit 140, into the cash bag 500 and seals the cash bag 500. However, the depositing apparatus 100 may place the coins into the cash bag 500. For example, as shown in FIG. 6A, the depositing apparatus 100 may include a return storage unit 240 that stores the coins transported by the transport unit 130 in the cash bag 500, in addition to the configuration described with reference to FIG. 2.

For example, as shown in 6B, two arms 241 (241a, 241b) provided in the return storage unit 240 are passed through sleeves 500a provided on the cash bag 500, and the cash bag 500 is held with an opening thereof kept open. The depositing apparatus 100 discharges coins transported to the return storage unit 240 by the transport unit 130 into the cash bag 500 to store the discharged coins therein, through a discharge port 131 which is inserted into the cash bag 500 from the opening. The customer removes the cash bag 500 from the arms 241, and closes the opening of the bag manually. The discharge port 131 and the arms 241 may be configured to move automatically, and after coins are stored in the cash bag 500, the discharge port 131 may retract upward and outward with respect to the cash bag 500, and the depositing apparatus 100 may cause the arms 241 to move such that the opening of the cash bag 500 is closed. For example, the opening of the cash bag 500 may be heat-sealed by partially heating the arms 241. For example, the return storage unit 240 may further include a component such as a robot hand for peeling off a release liner of an adhesive tape attached near the opening of the cash bag 500, and the release liner may be peeled off to adhesively close the opening of the cash bag 500 by the component.

In the example shown in FIG. 6, it may be possible to select whether to discharge loose coins through the return unit 140 or to store the loose coins in the cash bag 500 such that the cash bag 500 storing the discharged coins is removed from the return storage unit 240. The customer may make a selection. Alternatively, the clerk may configure the discharge route to either the return unit 140 or the return storage unit 240 depending on the operating conditions of the store.

The depositing apparatus 100 may change a timing to issue a coupon, depending on whether loose coins are discharged through the return unit 140 or these coins are stored in the cash bag 500 and discharged with the cash bag 500 through the return storage unit 240. For example, in a case where the depositing apparatus 100 discharges loose coins, a coupon is issued after the discharged loose coins are stored in the storage apparatus 200, and then deposited and stored in the depositing apparatus 100. In a case where the depositing apparatus 100 discharges coins stored in the cash bag 500 having the opening thereof closed, a coupon may be issued on condition that the cash bag 500 has been stored in the storage box 230.

In the present embodiment, coins are stored in the cash bag 500. However, the kind of container for storing coins is not particularly limited. For example, coins may be stored in a box-type container. In the present embodiment, coins have been described as an example, but the above-described handling may be performed on banknotes.

In the drawings of the present embodiment, for convenience of description, the depositing apparatus 100 is installed adjacent to the storage apparatus 200. However, the installation place of the storage apparatus 200 is not particularly limited. The storage apparatus 200 may be installed at a location away from the depositing apparatus 100. The money depositing system 1 may include a plurality of the depositing apparatuses 100 and/or a plurality of the storage apparatuses 200. In a case where the depositing apparatus 100 is unable to receive coins, the operation/display unit 160 may display a screen including information showing another depositing apparatus 100 that can receive coins. Thus, even if the customer becomes unable to deposit coins into the depositing apparatus 100 during a deposit transaction, the coins can be deposited into another depositing apparatus 100.

The present embodiment shows a configuration in which the money depositing system 1 includes the depositing apparatus 100, the storage apparatus 200, and the coupon issuing apparatus 300. However, the configuration is conceptually functional, and the configuration of the money depositing system 1 may not necessarily be physically limited thereto. For example, the depositing apparatus 100 may realize a part or all of the functions and operations of the coupon issuing apparatus 300, and/or a part or all of the functions and operations of the storage apparatus 200. Distributed or integrated forms of each device are not limited to the above-described forms, and all or some of the forms may be distributed or integrated functionally or physically in any unit depending on various loads, use statuses, or the like.

As described above, with the money depositing system and the money depositing method according to the present embodiment, even if the customer becomes unable to deposit money into the depositing apparatus, a deposit transaction can be continued. The customer can temporarily keep the money that cannot be deposited, in the storage apparatus. After that, the customer can deposit the money into the depositing apparatus and complete the deposit transaction. Since the customer need not take back home the money that cannot be deposited, convenience for the customer is improved.

## Claims

1. A money depositing method performed by a money depositing system, the money depositing method comprising:
performing a discharge process by a depositing apparatus including a depositing unit, a storage unit configured to store money therein, and a return unit, wherein, in the discharge process, money received through the depositing unit is recognized and counted in the depositing apparatus and discharged from the return unit to outside the depositing apparatus;
detecting that the money discharged from the depositing apparatus is stored in a storage box, of a storage apparatus, configured to store the money therein; and
issuing, from an issuing apparatus configured to issue a valuable medium, the valuable medium based on an amount of the money, on condition that storage of the money in the storage apparatus is detected.

2. The money depositing method according to claim 1, wherein the discharge process is performed when the depositing apparatus determines that money cannot be stored in the storage unit.

3. The money depositing method according to claim 1 or 2, further comprising
performing a storing process, by the depositing apparatus, in which the money received in the depositing unit is recognized and counted in the depositing apparatus and stored in the storage unit, wherein
in a case where the depositing apparatus determines that the money cannot be stored in the storage unit during the storing process, the discharge process is performed for the money remaining in the depositing unit.

4. The money depositing method according to claim 2 or 3, wherein
the depositing apparatus determines that the money cannot be stored in the storage unit when a quantity of money stored in the storage unit reaches a predetermined capacity.

5. The money depositing method according to claim 3 or 4, wherein the valuable medium is issued, based on a total amount of the money stored in the storage unit of the depositing apparatus and the money stored in the storage box of the storage apparatus.

6. The money depositing method according to claim 3 or 4, wherein
the issuing of the valuable medium includes
issuing a first valuable medium based on an amount of the money stored in the storage unit of the depositing apparatus, and
issuing a second valuable medium based on an amount of the money stored in the storage box of the storage apparatus.

7. The money depositing method according to any one of claims 1 to 6, wherein the storage of the money in the storage box of the storage apparatus is detected based on a change in weight resulting from placement of an object in the storage box.

8. The money depositing method according to claim 7, wherein the issuing of the valuable medium is performed on condition that a weight of the object stored in the storage box matches, within a predetermined error margin, a weight of the money discharged from the depositing apparatus.

9. The money depositing method according to any one of claims 1 to 8, further comprising
storing information on the money discharged from the depositing apparatus in the discharge process, and identification information of a money container in which discharged money is stored, so as to be associated with each other.

10. The money depositing method according to claim 9, wherein the issuing of the valuable medium is performed on condition that the identification information of the money container stored in the storage apparatus is acquired.

11. The money depositing method according to any one of claims 1 to 6, further comprising
performing a counting process, after the money discharged from the depositing apparatus in the discharge process has been stored in the storage box of the storage apparatus, in which the money taken out of the storage box is recognized and counted in the depositing apparatus, wherein
the issuing of the valuable medium is performed after completing the counting process.

12. The money depositing method according to any one of claims 1 to 6, further comprising
performing a counting process, after the money discharged from the depositing apparatus in the discharge process has been stored in the storage box of the storage apparatus, in which the money taken out of the storage box is recognized and counted in the depositing apparatus, wherein
the valuable medium is electronic data that is activated based on an amount of the money recognized and counted in the counting process.

13. The money depositing method according to any one of claims 1 to 12, wherein
in the discharge process, it is possible to select whether to discharge loose money from the depositing apparatus or to place the loose money into a money container and discharge the loose money being stored in the money container.

14. The money depositing method according to claim 13, further comprising
in a case where the loose money has been discharged from the depositing apparatus in the discharge process, and the discharged loose money has been stored in the storage box of the storage apparatus,
recognizing and counting, by the depositing apparatus, the loose money taken out of the storage box.

15. A money depositing system comprising:
a depositing apparatus that includes a storage unit configured to store money received through a depositing unit and is configured to recognize and count, by a recognition unit, the money received through the depositing unit and discharge the money from a return unit to outside the depositing apparatus;
a storage apparatus that includes a storage box configured to store the money and a detection unit configured to detect that the money discharged from the depositing apparatus has been stored in the storage box; and
an issuing apparatus configured to issue a valuable medium, based on an amount of the money that is detected by the detection unit of the storage apparatus.
